# FASCICULE DE BREVET EUROPEEN

(11) **EP 0 310 075 B1**
(45) Date de publication et mention de la délivrance du brevet: **10.03.1993**
(21) Numéro de dépôt: 88116089.9
(22) Date de dépôt: 29.09.1988
(51) Int. Cl.: H01M 6/46, H01M 6/32

(54) **Générateur électrochimique amorçable mettant en oeuvre des couples lithium/oxyhalogénure**
Aktivierbarer elektrochemischer Lithium-Oxyhalogenid-Generator
Activatable electrochemical generator utilising lithium-oxyhalogenid couples

(30) Priorité: 29.09.1987 FR 8713437
(43) Date de publication de la demande: 05.04.1989
(73) Titulaire: SAFT (inscrite au Registre du Commerce sous le numéro 343 588 737), F-93230 Romainville (FR)
(72) Inventeur: Planchat, Jean-Pierre, F-86280 Saint Benoit (FR); Descroix, Jean-Pierre, F-94120 Fontenay sous Bois (FR); Jehanno, Philippe, F-44500 La Baule (FR)
(74) Mandataire: Weinmiller, Jürgen

(56) Documents cités:
- EP-A- 0 114 667
- FR-A- 1 557 803
- GB-A- 1 209 336
- US-A- 4 535 038
- US-A- 4 752 540

## Description

La présente invention concerne un générateur électrochimique amorçable mettant en oeuvre une pluralité de couples lithium/oxyhalogénure, par exemple Li/SOCl₂ ou Li/SO₂Cl₂.

On connaît par le brevet français n^{o} 1 534 907 du 22 juin 1967 un générateur électrochimique amorçable comportant un empilement d'éléments plats connectés électriquement en série, chaque élément plat étant constitué par un certain nombre de cellules élémentaires montées électriquement en parallèle. Les électrodes de chaque cellule sont munies de pattes de connexion situées sur la périphérie de l'empilement. Les pattes de même polarité des électrodes sont reliées entre elles par l'intermédiaire d'entretoises métalliques et forment une borne pour l'élément correspondant.

Les éléments plats sont empilés les uns sur les autres par enfilement sur deux tiges de leurs bornes de sortie ; on réalise un montage électrique en série en enfilant successivement une borne positive et une borne négative avec interposition d'une entretoise métallique ou isolante selon le cas.

On constate que dans la structure précédente apparaissent des courants de fuite trop importants. Dans le brevet français n^{o} 2 539 917 on a proposé de limiter ces courants de fuite en prévoyant, pour réaliser l'enfilement sur les tiges de connexion, des perforations dans les électrodes elles-mêmes, et non au niveau de pattes extérieures périphériques. Une telle disposition s'est avérée encore insuffisante dans le cas des générateurs amorçables au lithium/chlorure de thionyle ou au lithium/chlorure de sulfuryle.

Le problème posé par l'utilisation de ces générateurs est très aigu, car ils doivent pouvoir répondre aux deux exigences suivantes :
- Un maintien en circuit ouvert après amorçage pendant plusieurs heures, ce qui signifie que les courants de fuite doivent être totalement éliminés ; en plus de la perte de capacité qu'ils engendrent, les courants de fuite créent un phénomène secondaire de dépôts de mousses de lithium susceptibles d'entraîner des courts-circuits.
- Une décharge rapide en quelques minutes générant une importante quantité de calories.

Il convient donc de résoudre à la fois une problème d'isolement électrique, et un problème de maîtrise de l'accroissement de la température du générateur, un accroissement excessif pouvant entraîner une explosion.

La présente invention a pour but de résoudre ce double problème.

La présente invention a pour objet un générateur électrochimique amorçable mettant en oeuvre une pluralité de couples lithium/oxyhalogénure comprenant un réservoir d'électrolyte susceptible d'être mis en communication avec un bloc électrochimique par des moyens d'amorçage, ledit bloc électrochimique comportant un empilement d'éléments plats connectés électriquement en série, chaque élément plat étant constitué par plusieurs cellules élémentaires montées électriquement en parallèle par l'intermédiaire de tiges internes métalliques sur lesquelles sont enfilées les électrodes avec des entretoises , caracterisé par le fait que chaque élément plat est enfermé dans un boîtier isolant étanche formé d'un fond, d'un couvercle, et d'une entretoise définissant la paroi latérale, le fond d'un boîtier constituant le couvercle du boîtier adjacent, les entretoises, ledit fond et ledit couvercle présentant des orifices correspondant et définissant un puits commun pour l'alimentation en électrolyte orthogonal à l'ensemble des éléments ; les entretoises présentent en outre des canaux de transfert d'électrolyte du puits d'alimentation vers chaque élément ; les bornes de chaque élément sont constituées par deux plaques métalliques appliquées respectivement contre le fond et le couvercle du boîtier concerné avec des bords émergeants du boîtier pour permettre la connexion électrique en série ; l'ensemble des boîtiers et des bords des plaques métalliques qui en émergent est noyé dans une résine thermoconductrice.

Selon un mode de réalisation préférentiel, chaque canal de transfert d'électrolyte ménagé dans une entretoise présente un diamètre faible et une grande longueur, les dimensions étant choisies pour que, dès l'amorçage, la faible quantité d'électrolyte qui y est contenue soit portée très rapidement à ébullition.

Par ailleurs, il est préférable que la quantité d'électrolyte contenue dans le réservoir d'electrolyte soit telle qu'il subsiste de l'électrolyte dans le puits commun d'alimentation pendant toute la décharge.

Grâce à la mise en oeuvre des boîtiers isolants pour chaque élément et au choix des dimensions des canaux de transfert d'électrolyte, on constate que l'on a pratiquement supprimé tous les courants de fuite ; l'échauffement des éléments inhérent à la structure des boîtiers isolants est dissipé grâce aux plaques collectrices servant de bornes aux éléments et dont les bords émergeants sont noyés dans une résine thermoconductrice.

D'autres caractéristiques et avantages de la présente invention apparaîtront au cours de la description suivante d'un mode de réalisation donné à titre illustratif mais nullement limitatif. Dans le dessin annexé :
- La figure 1 est une vue partielle schématique en coupe longitudinale du bloc électrochimique appartenant à un générateur selon l'invention.
- Les figures 2A et 2B sont des vues partielles en coupe d'un élément plat appartenant au bloc électrochimique de la figure 1.
- La figure 3 est une vue de dessus d'un fond ou d'un couvercle appartenant au boîtier renfermant l'élément des figures 2A-2B.
- La figure 4 est une vue de dessus de l'entretoise formant la paroi latérale du boîtier renfermant l'élément des figures 2A-2B.
- La figure 5 est une vue de dessus d'une plaque métallique collectrice de courant constituant une borne pour l'élément des figures 2A-2B.
- La figure 6 est une vue de dessus d'une anode au lithium appartenant à l'élément des figures 2A-2B.

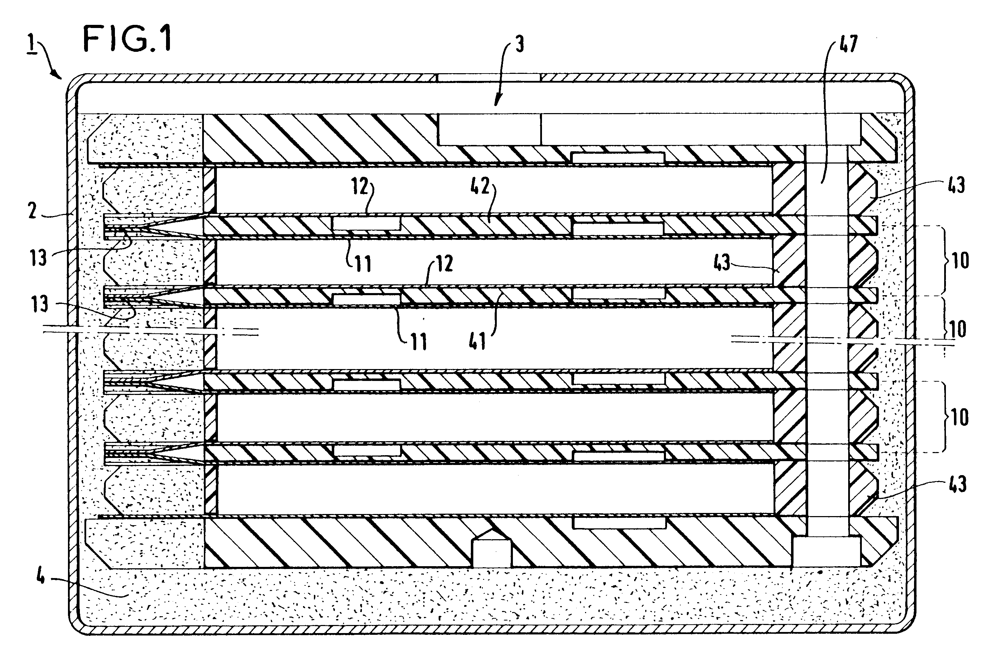

On voit dans la figure 1 le bloc électrochimique 1 d'un générateur selon l'invention à anode de lithium. Ce bloc électrochimique contenu dans un bac métallique 2 est relié à sa partie supérieure à un réservoir d'électrolyte associé à des moyens d'amorçage non illustrés. On a référencé 3 l'ouverture permettant l'injection de l'électrolyte qui est un oxyhalogénure, de préférence le chlorure de thionyle ou le chlorure de sulfuryle.

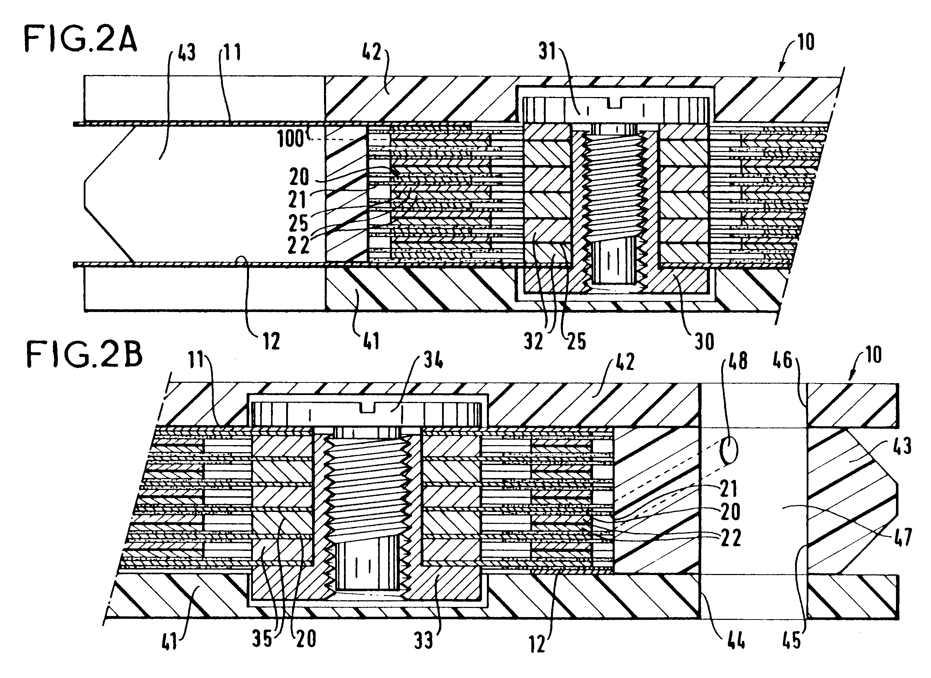

Le bloc 1 est formé d'un empilement d'éléments plats 10 qui seront décrits à l'aide des figures 2A-2B, reliés en série par l'intermédiaire de plaques métalliques 11, 12 par exemple en nickel, dont la structure détaillée sera explicitée plus loin. On voit simplement sur la figure 1 la connexion 13 de deux éléments 10 adjacents. La périphérie des éléments plats 10 et les bords des plaques 11 et 12 qui en émergent sont noyés dans une résine thermoconductrice 4 du genre résine époxy chargée par exemple d'alumine.

On voit dans les figures 2A-2B un élément plat 10 plus en détail. Il comporte un empilement de cellules élémentaires 100 montées électriquement en parallèle. Chaque cellule est constituée d'une anode au lithium 20, d'un séparateur 21 et d'une cathode 22.

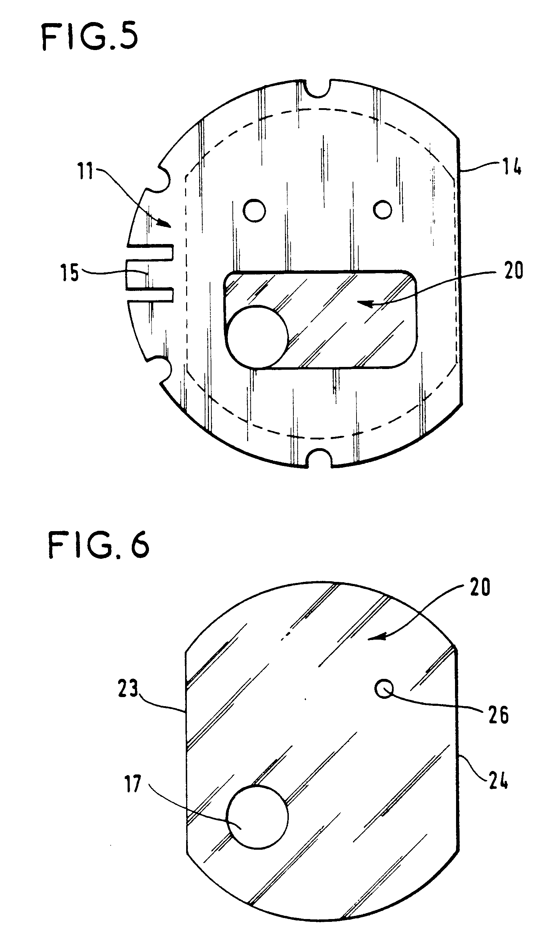

La géométrie de l'anode de lithium 20 apparaît dans la figure 6 ; elle présente un périmètre circulaire avec deux pans coupés 23 et 24. Elle peut être constituée d'une feuille de lithium ou de deux feuilles de lithium incrustées dans une grille de nickel interposée.

Le séparateur 21 a la forme d'un disque, et il est de préférence formé de deux couches superposées : une couche résistante du point de vue mécanique en tissu de verre, et une couche microporeuse constitutée d'un feutre de fibres de verre.

La cathode 22 a une forme analogue à celle de l'anode 20 ; elle est constituée d'une grille de nickel électroformée 25 dont les faces sont recouvertes de noir d'acétylène lié par du polytétrafluoréthylène.

On voit dans la figure 2A que les anodes et les cathodes sont percées d'orifices pour permettre le passage d'un axe 30 associé à une vis de blocage 31 et servant de borne positive. Des entretoises métalliques 32 s'appuyant sur les grilles 25 des cathodes 22 assurent l'écartement adéquat de ces cathodes et leur connexion électrique.

Du côté négatif (voir figure 2B) est prévu un axe 33 associé à une vis de blocage 34, servant de borne négative ; des entretoises métalliques 35 s'appuyant sur les anodes 20 assurent leur écartement et leur connexion électrique.

On voit dans la figure 6 l'orifice 26 prévu dans l'anode 20 pour le passage de l'axe 33 et l'orifice 17 prévu pour le passage de l'axe 30 et des entretoises 32. Les cathodes 22 comportent des orifices analogues.

Selon l'invention, les cellules élémentaires 100 ainsi connectées sont enfermées dans un boîtier en matériau isolant formé d'un fond 41, d'un couvercle 42 et d'une entretoise 43 formant la paroi latérale. Le matériau du boîtier est de préférence choisi parmi les polymères fluorés, la mélamine. Au moment de la réalisation de l'empilement, l'ensemble des fonds, des couvercles et des entretoises est comprimé à l'aide de tirants non illustrés, de manière que l'étanchéité soit assurée au niveau de chaque boîtier.

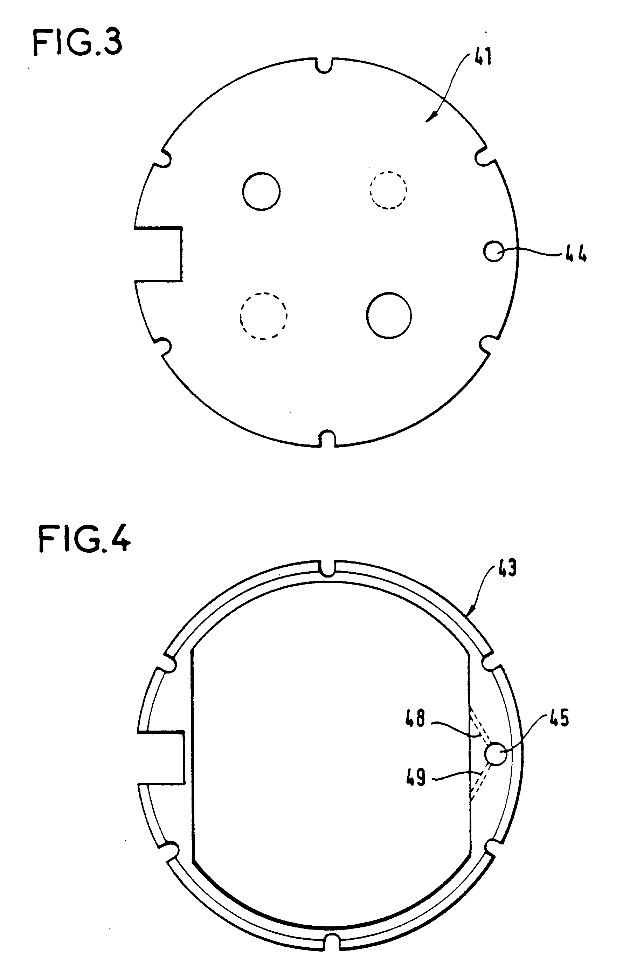

La figure 3 montre en vue de dessus un fond 41, et la figure 4 montre en vue de dessus une entretoise 43, le fond 41 l'entretoise 43 et le couvercle 42, présentant respectivement des orifices en regard 44, 45 et 46 (Fig. 2B) définissant un puits 47 d'alimentation en électrolyte commun à tous les éléments 10.

Chaque entretoise comporte en outre des canaux très fins 48 et 49 (figure 4) destinés à permettre le transfert de l'électrolyte du puits commun 47 aux cellules électrochimiques élémentaires 100. Ces canaux ont une section faible et une longueur telle que la quantité d'électrolyte qu'ils peuvent retenir est très faible et se met à bouillir très rapidement après l'amorçage du générateur. Dès l'apparition de bulles le filet d'électrolyte contenu dans le canal est rompu et le courant de fuite disparait.

Les canaux sont inclinés par rapport au plan des électrodes pour des raisons de facilité d'usinage.

A titre d'exemple, le diamètre d'un canal est de 1 mm, et sa longueur de 20 mm. L'élévation de température dans les canaux est de l'ordre de 4°C par seconde après l'amorçage du générateur. Le point d'ébullition de l'électrolyte étant voisin de 80°C sous 1 atmosphère, il suffit de 20 secondes environ pour que se produise l'ébullition de l'électrolyte dans les canaux et la rupture des courants de fuite.

La quantité d'électrolyte dans le réservoir est choisie de manière que le puits commun 47 contienne toujours une certaine quantité d'électrolyte en réserve pour éviter l'assèchement des électrodes ; l'électrolyte transféré ainsi dans les éléments par les canaux 48, 49 se remet très rapidement à bouillir et dès l'apparition de bulles les courants de fuite sont interrompus.

Comme on l'a déjà indiqué plus haut, les bornes de l'élément 10 sont constituées par des plaques en nickel 11 et 12 disposées respectivement contre le fond 41 et le couvercle 42 de l'élément 10. La figure 5 montre en vue de dessus une plaque 11 de forme générale circulaire avec un pan coupé 14. La connexion 13 entre deux éléments adjacents est réalisée au niveau d'une languette 15.

Grâce à ces plaques de nickel, les calories dissipées lors de la décharge sont évacuées vers la résine thermoconductrice 4. A titre d'exemple, au cours d'une décharge de 10 minutes, on a une dissipation de 135.000 joules. Grâce à la structure des plaques métalliques collectrices émergeant dans la résine thermoconductrice, la température de la pile ne s'élève que de 50°C, alors qu'elle dépasserait 150°C sans une telle disposition avec les risques d'explosion qui en résulteraient.

## Revendications

1. Générateur électrochimique amorçable mettant en oeuvre une pluralité de couples lithium/oxyhalogénure comprenant un réservoir d'électrolyte susceptible d'être mis en communication avec un bloc électrochimique par des moyens d'amorçage, ledit bloc électrochimique comportant un empilement d'éléments plats connectés électriquement en série, chaque élément plat étant constitué par plusieurs cellules élémentaires montées électriquement en parallèle par l'intermédiaire de tiges internes métalliques sur lesquelles sont enfilées les électrodes avec des entretoises, caractérisé par le fait que chaque élément plat (10), est enfermé dans un boîtier isolant étanche formé d'un fond (41), d'un couvercle (42), et d'une entretoise (43) définissant la paroi latérale, le fond d'un boîtier constituant le couvercle du boîtier adjacent, les entretoises, ledit fond et ledit couvercle présentant des orifices (45, 44, 46) correspondant et définissant un puits commun (47) pour l'alimentation en électrolyte orthogonal à l'ensemble des éléments, les entretoises présentant en outre des canaux de transfert (48, 49) d'électrolyte du puits d'alimentation vers chaque élément (10), les bornes de chaque élément étant constituées par deux plaques métalliques (11, 12) appliquées respectivement contre le fond et le couvercle du boîtier concerné avec des bords émergeants du boîtier pour permettre la connexion électrique en série, l'ensemble des boîtiers et des bords des plaques métalliques (11, 12) qui en émergent étant noyé dans une résine thermoconductrice (4).

2. Générateur électrochimique selon la revendication 1, caractérisé par le fait que chaque canal de transfert (48, 49) d'électrolyte ménagé dans une entretoise présente un faible diamètre et une grande longueur, les dimensions étant choisies pour que, dès l'amorçage, la faible quantité d'électrolyte qui y est contenue soit portée très rapidement à ébullition.

3. Générateur électrochimique selon l'une des revendications 1 et 2, caractérisé par le fait que la quantité d'électrolyte contenue dans le réservoir est choisie de manière qu'il subsiste toujours de l'électrolyte dans le puits d'alimentation (47).

## Claims

1. An activatable electrochemical battery implementing a plurality of lithium/oxyhalide couples, the battery comprising a tank of electrolyte suitable for being put into communication with an electrochemical block by activation means, said electrochemical block comprising a stack of flat elements which are electrically connected in series, each flat element being constituted by a plurality of elementary cells which are electrically connected in parallel by means of internal metal rods onto which the electrodes are threaded together with spacers, characterized in that each flat element (10) is enclosed in a sealed insulating housing comprising a bottom (41), a cover (42), and a spacer (43) defining its side wall, the bottom of one housing constituting the cover of the adjacent housing, the spacers, said bottom and said cover having corresponding orifices (45, 44, 46) defining a common electrolyte feed well (47) orthogonal to the set of elements, the spacers further including channels (48, 49) for transferring electrolyte from the feed well towards each element (10), the terminals of each element being constituted by two metal plates (11, 12) pressed respectively against the bottom and the cover of the corresponding housing with edges emerging from the housing in order to make said series electric connection possible, the set of housings and the edges of the metal plates (11, 12) which emerge therefrom being embedded in a heat-conducting resin (4).

2. An electrochemical battery according to claim 1, characterized in that each electrolyte transfer channel (48, 49) provided in a spacer is small in diameter and long in length, with its dimensions being chosen so that after activation, the small quantity of electrolyte contained therein is very rapidly raised to boiling point.

3. An electrochemical battery according to claim 1 or 2, characterized in that the quantity of electrolyte contained in the tank is selected in such a manner as to ensure that there always remains some electrolyte in the feed well (47).

## Patentansprüche

1. Aktivierbaren elektrochemischen Generator, der eine Vielzahl von Lithium/Oxyhalogenid-Paaren verwendet, mit einem Elektrolyttank, der mit einem elektrochemischen Block über Aktiviermittel in Verbindung gebracht werden kann, wobei der elektrochemische Block einen Stapel von flachen, elektrisch in Reihe geschalteten Elementen aufweist und jedes flache Element aus mehreren Elementarzellen besteht, die elektrisch parallelgeschaltet sind über innere Metallstäbe, auf denen die Elektroden mit Zwischenstücken aufgesteckt sind, dadurch gekennzeichnet, daß jedes flache Element (10) in einem dichten Isoliergehäuse eingeschlossen ist, das aus einem Boden (41), einem Deckel (42) und einem Zwischenstück (43) besteht, das die Seitenwand darstellt, wobei der Boden eines Gehäuses den Deckel des nächstliegenden Gehäuses bildet, wobei die Zwischenstücke, der Boden und der Deckel einander entsprechende Öffnungen (45, 44, 46) aufweisen, die einen gemeinsamen Brunnen (47) für die Zuführung von Elektrolyt orthogonal zur Einheit der Elemente bilden, wobei die Zwischenstücke weiter Kanäle (48, 49) für die Übertragung von Elektrolyt vom Speisebrunnen zu jedem Element (10) aufweisen und die Klemmen jedes Elements aus zwei Metallplatten (11, 12) bestehen, die gegen den Boden bzw. den Deckel des betreffenden Gehäuses anliegen, wobei Ränder aus dem Gehäuse vorstehen, um die elektrische Reihenschaltung zu ermöglichen, und daß die Einheit der Gehäuse und der daraus hervorstehenden Ränder der Metallplatten (11, 12) in ein wärmeleitendes Harz (4) getaucht ist.

2. Elektrochemischer Generator nach Anspruch 1, dadurch gekennzeichnet, daß jeder in einem Zwischenstück vorhandene Kanal (48, 49) zur Übertragung von Elektrolyt einen geringen Durchmesser und eine große Länge aufweist, wobei die Abmessungen so gewählt sind, daß bei der Aktivierung die geringe Menge Elektrolyt, die darin enthalten ist, sehr schnell zum Sieden kommt.

3. Elektrochemischer Generator nach einem der Ansprüche 1 und 2, dadurch gekennzeichnet, daß die Menge des im Elektrolyttank enthaltenen Elektrolyten so gewählt ist, daß während der ganzen Entladung Elektrolyt im Speisebrunnen (47) bleibt.
